# EUROPEAN PATENT SPECIFICATION

(11) **EP 2 601 852 B1**
(45) Date of publication and mention of the grant of the patent: **12.02.2014**
(21) Application number: 11192046.8
(22) Date of filing: 06.12.2011
(51) Int. Cl.: A43C 7/04, A43C 7/00, A43C 7/08

(54) **Binding assembly**
Bindungsanordnung
Ensemble de liaison

(43) Date of publication of application: 12.06.2013
(73) Proprietor: Jin Jiang City, Shoes-Lock Co. Ltd., JinJiang City, Fujian (CN)
(72) Inventor: Chen, Yi-Liang, Taichung City (TW)
(74) Representative: Becker Kurig Straus

(56) References cited:
- US-A1- 2008 250 617
- US-A1- 2009 193 634
- US-B1- 7 036 193

## Description

### 1. Field of the Invention

The present invention relates to a binding assembly, and more particularly to a binding assembly that can be tightened or released easily and rapidly.

### 2. Description of Related Art

A tie is always applied to bind an object, such as a shoe. To bind a shoe with a tie, the tie is tied into a bow, but to tie a bow is difficult for a child or a disable person. The conventional bow tied by a child or a disable person is easily released to cause inconvenience during the use of the object.

US 2009/193634 discloses a binding assembly which serves as basis for the binding assembly of claim 1.

To overcome the shortcomings, the present invention tends to provide a binding assembly to mitigate or obviate the aforementioned problems.

The main objective of the invention is to provide a binding assembly that can be tightened or released easily and rapidly.

The binding assembly has a binding frame, a pulling tie and a tightening tie. The binding frame has a base, a pressing member, two pivotal ears, two tie fastening holders and two separating members. The base has a top and two opposite sides. The pressing member is mounted on the top of the base. The pivotal ears are mounted respectively on the opposite sides of the base. The tie fastening holders are respectively connected pivotally to the pivotal ears and are L-shaped Each tie fastening holder has a lateral segment, a longitudinal segment, a pulling tie hole and a tightening tie hole. The lateral segment is pivotally connected to a corresponding one of the pivotal ears. The longitudinal segment is connected to the lateral segment. The pulling tie hole is defined through the longitudinal segment. The tightening tie hole is defined through the lateral segment. The separating members are mounted respectively around the lateral segments of the tie fastening holders to divide the tightening tie hole in a corresponding lateral segment into a first hole segment being adjacent to the corresponding pivotal ear and a second hole segment away from the corresponding pivotal ear. The pulling tie is mounted through and compressed by the pressing member and has two ends mounted respectively through the pulling tie holes in the tie fastening holders. The tightening tie has two ends mounted respectively through the first hole segments in the tie fastening holders along a first direction, mounted respectively over the separating members and mounted respectively through the second hole segments in the tie fastening holders along a second direction opposite to the first direction.

Other objects, advantages and novel features of the invention will become more apparent from the following detailed description when taken in conjunction with the accompanying drawings.

### IN THE DRAWINGS

Fig. 1 is a top view of a binding assembly in accordance with the present invention;
Fig. 2 is an enlarged perspective view of the binding frame of the binding assembly in Fig. 1;
Fig. 3 is an exploded perspective view of the binding frame in Fig. 2;
Fig. 4 is an operation top view of the binding assembly in Fig. 1 showing two ends of the tightening tie being pulled;
Fig. 5 is an operation top view of the binding assembly in Fig. 1 showing the binding assembly in a tightened condition;
Fig. 6 is an operation top view of the binding assembly in Fig. 1 showing the binding assembly being released by pulling the pulling tie;
Fig. 7 is an operation top view of the binding assembly in Fig. 1 applied on to a show and showing the binding assembly being tightened;
Fig. 8 is an operation top view of the binding assembly in Fig. 1 applied on to a show and showing the binding assembly being released;
Fig. 9 is a top view of another embodiment of a binding assembly in accordance with the present invention;
Fig. 10 is an operation perspective view of the binding assembly in Fig. 9 applied on to a cake case; and
Fig. 11 is another operation perspective view of the binding assembly in Fig. 9 served as a belt.

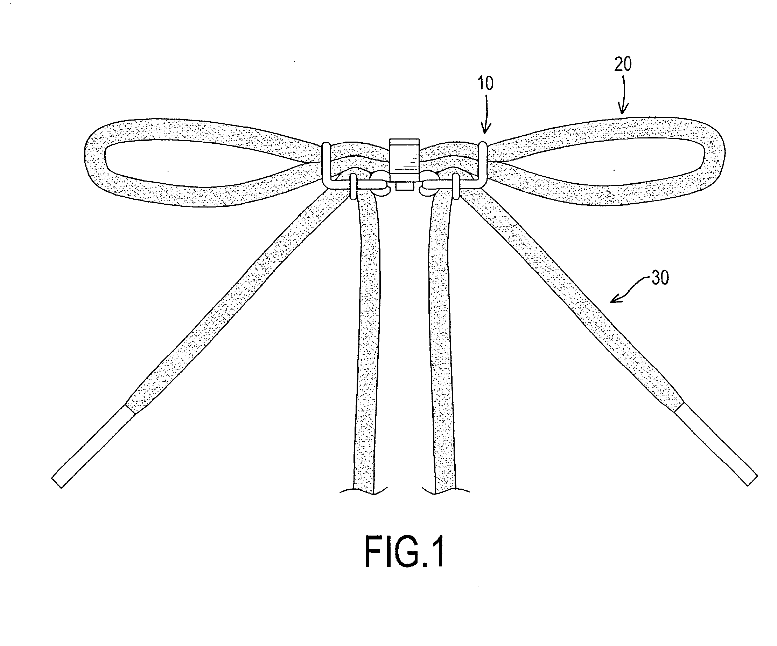

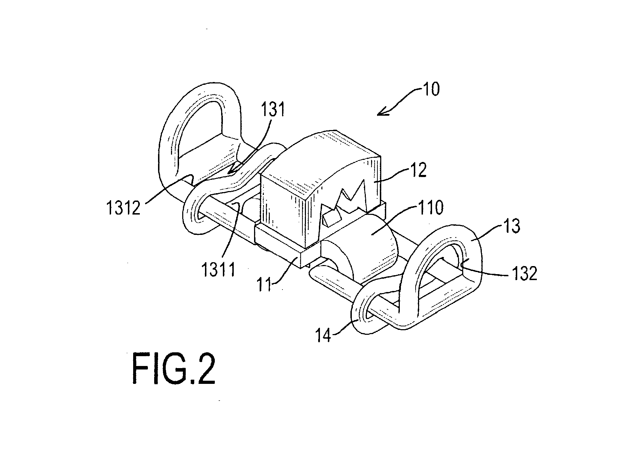

With reference to Figs. 1 and 2, a binding assembly in accordance with the present invention comprises a binding frame 10, a pulling tie 20 and a fastening tie 30.

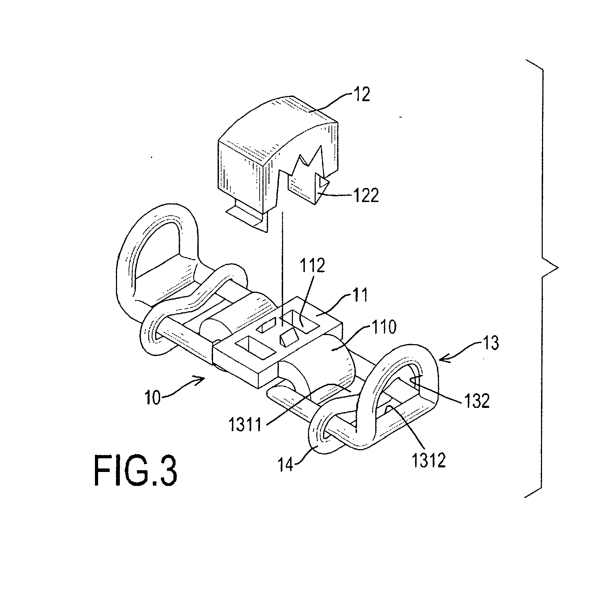

With further reference to Fig. 3, the binding frame 10 comprises a base 11, two pivotal ears 110, a pressing member 12, two tie fastening holders 13 and two separating members 14. The base 11 may be rectangular and has a top, a bottom, two opposite sides and two engaging holes 112. The engaging holes 112 are defined through the base 11. The pivotal ears 110 are respectively mounted on and extend downwardly from the opposite sides of the base 11 and may be curved in cross section. The pressing member 12 is mounted on the top of the base 11, may be inversed U-shaped and has two ends and two hooks 122. The hooks 122 are formed respectively on the ends of the pressing member 12, engage respectively the engaging holes 112 in the base 11 and abut with the bottom of the base 11. Accordingly, the pressing member 12 is mounted securely on the top of the base 11.

The tie fastening holders 13 are respectively connected pivotally to the pivotal ears 110 and are L-shaped, and each tie fastening holder 13 comprises a lateral segment, a longitudinal segment, a pulling tie hole 132 and a tightening tie hole 131. The lateral segment is pivotally connected to a corresponding one of the pivotal ears 110. The longitudinal segment is connected to and substantially perpendicular to the lateral segment. The pulling tie hole 132 is defined through the longitudinal segment. The tightening tie hole 131 defined through the lateral segment.

The separating members 14 are mounted respectively around the lateral segments of the tie fastening holders 13 to divide the tightening tie hole 131 in a corresponding lateral segment into a first hole segment 1311 being adjacent to the corresponding pivotal ear 110 and a second hole segment 1312 away from the corresponding pivotal ear 110. Preferably, each separating member 14 is annular and has a depression segment formed on a top of the separating member 14.

The pulling tie 20 is mounted through and compressed by the pressing member 12 and has two ends mounted respectively through the pulling tie holes 132 in the tie fastening holders 13. Preferably, the pulling tie 20 is annular and formed as a loop and has a central segment compressed by the pressing member 12 to form two end loops mounted respectively through the pulling tie holes 132 in the tie fastening holders 13.

The tightening tie 30 has two ends mounted respectively through the first hole segments 1311 in the tie fastening holders 13 along a first direction, mounted respectively over the separating members 14 and mounted respectively through the second hole segments 1312 in the tie fastening holders 13 along a second direction opposite to the first direction. Preferably, the ends of tightening tie 30 are mounted respectively through the first hole segments 1311 in the tie fastening holders 13 upwardly and mounted respectively through the second hole segments 1312 in the tie fastening holders 13 downwardly as show in Fig. 1.

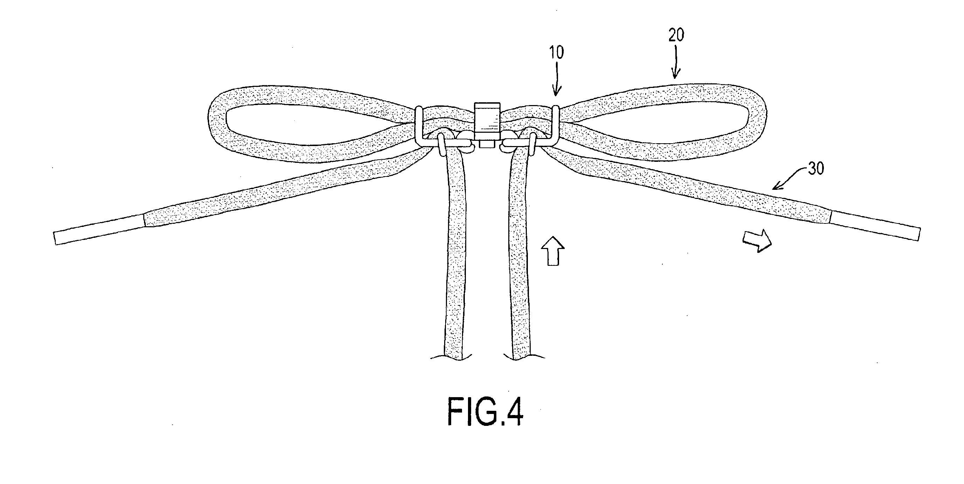

With reference to Figs. 2 and 4, when the ends of the tightening tie 30 are pulled outwardly, the tightening tie 30 is pulled to move along the first hole segments 1311 and the second hole segments 1312. Consequently, the tightening tie 30 can be tightened to bind an object.

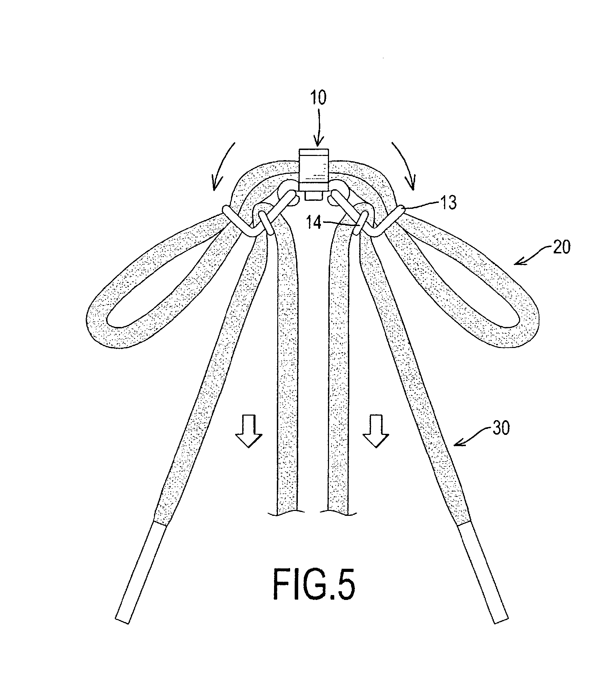

With reference to Fig. 5, when the tightening tie 30 beside the ends is pulled, such as the central segment of the tightening tie 30, the tie fastening holders 13 are pulled to pivot downwardly relative to the base 11. Consequently, the pulling tie 20 is pulled to abut against the tightening tie 30 due to the pivotal rotation of the tie fastening holders 13, such that the tightening tie 30 is kept from being moved relative to the binding frame 10. Thus, the binding assembly will not be released even that the binding frame 10 or the tightening tie 30 is pulled.

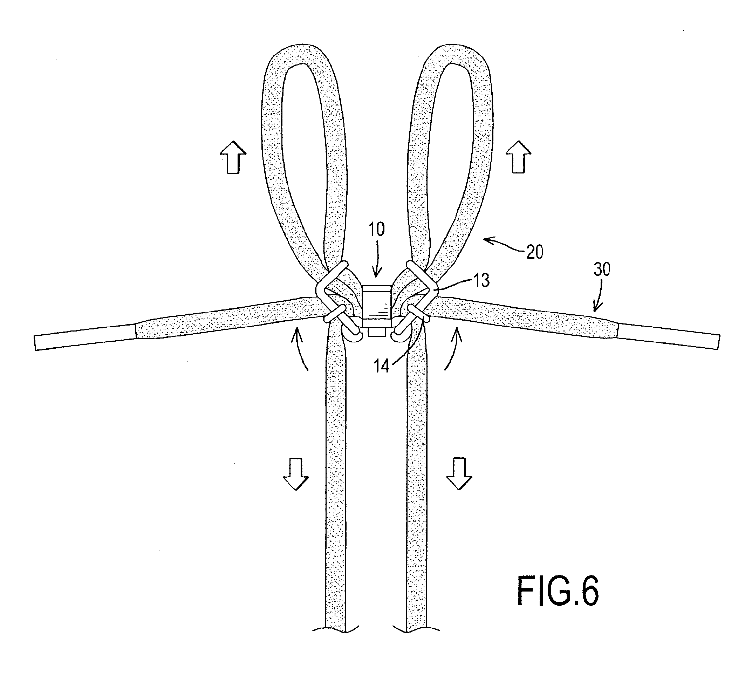

With reference to Fig. 6, to release the binding assembly, the end loops of the pulling tie 20 are pulled upwardly and the tie fastening holders 13 are pivoted upwardly to make the central segment of the pulling tie 20 leave from the tightening tie 30. Accordingly, the tightening tie 30 can be moved relative to the binding frame 10, and the binding assembly can be released.

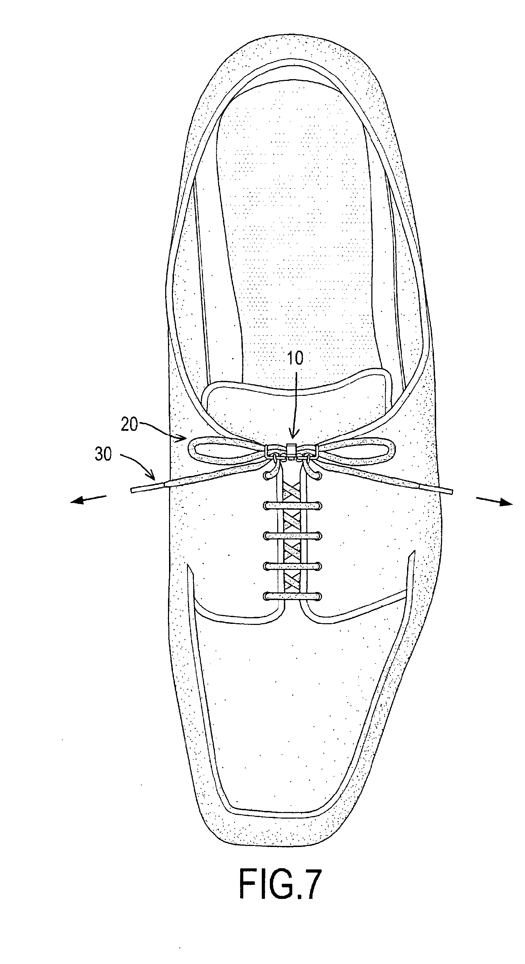

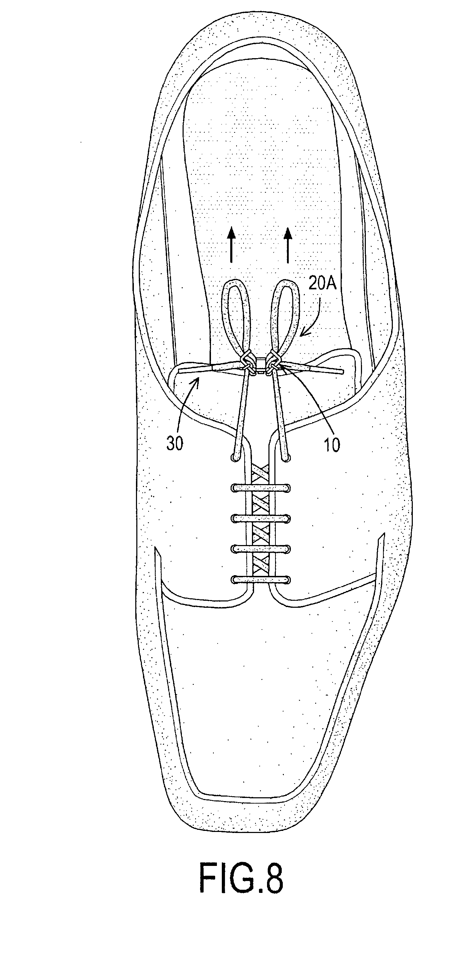

With reference to Figs. 7 and 8, when the binding assembly is applied to a shoe, the shoe can be bound by pulling the ends of the tightening tie 30. With reference to Fig. 8, the shoe can be released easily by pulling the pulling tie 20 away from the shoe. Therefore, to bind or to release a shoe is easy and convenient for a child or a disable person with a single hand.

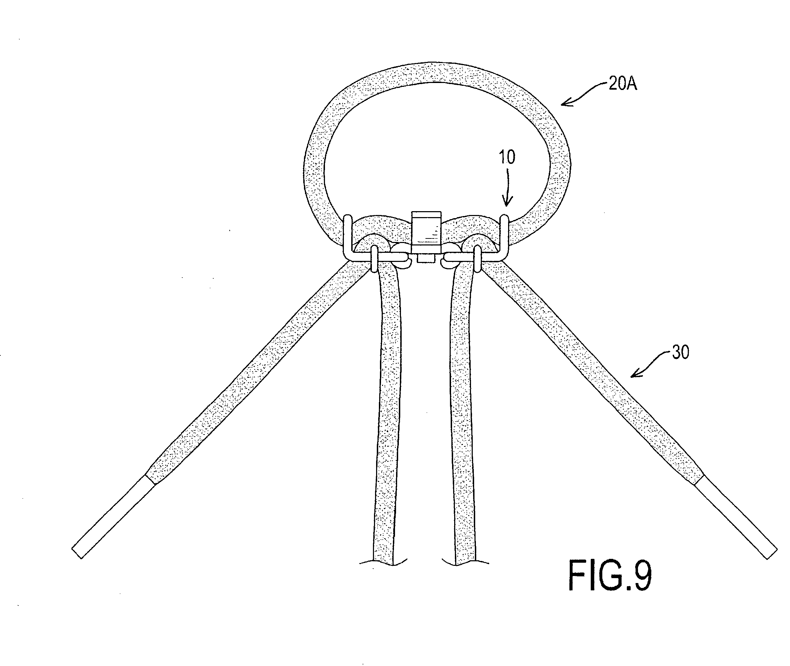

With reference to Fig. 9, in another embodiment of the present invention, the pulling tie is a loop 20A mounted through the pressing member 12 and the pulling tie holes 132 in the tie fastening holders 13 as shown in Fig. 2. With pulling the pulling tie 20A, the bind assembly can be released.

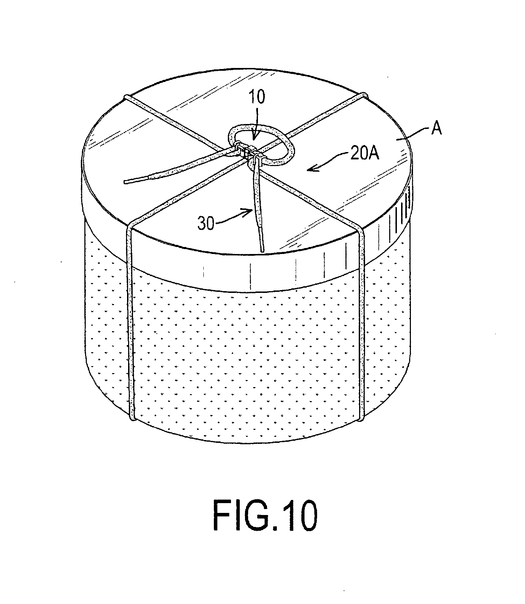

With reference to Fig. 10, the bind assembly can be applied to bind a cylindrical object A, such as a cake case with the tightening tie 30 mounting around the cylindrical object A. The cylindrical object A can be bound or released easily and rapidly by pulling the ends of the tightening tie 30 or the pulling tie 20A.

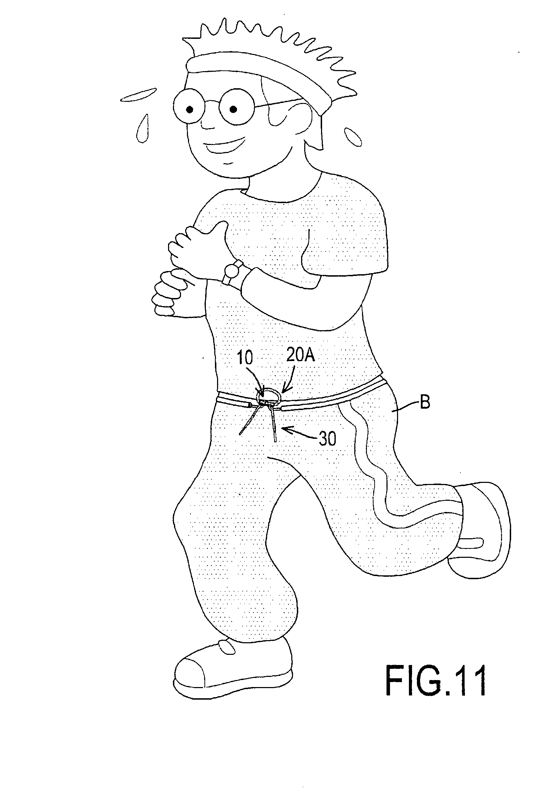

With reference to Fig. 11, the binding assembly in accordance with the present invention can be served as a belt for a pant B, such that the binding assembly is versatile in use. Furthermore, the pulling tie 30 and the tightening tie 20,20A can be colored in different colors to fit with different needs of use.

Even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A binding assembly comprising:
a binding frame (10) comprising
a base (11) having a top and two opposite sides;
a pressing member (12) mounted on the top of the base (11);
two pivotal ears (110) mounted respectively on the opposite sides of the base (11);
two tie fastening holders (13) respectively connected pivotally to the pivotal ears (110) and being L-shaped, and each tie fastening holder (13) comprising
a lateral segment pivotally connected to a corresponding one of the pivotal ears (110);
a longitudinal segment connected to the lateral segment;
a pulling tie hole (132) defined through the longitudinal segment; and
a tightening tie hole (131) defined through the lateral segment; and
two separating members (14) mounted respectively around the lateral segments of the tie fastening holders (13) to divide the tightening tie hole (131) in a corresponding lateral segment into a first hole segment (1311) being adjacent to the corresponding pivotal ear (110) and a second hole segment (1312) away from the corresponding pivotal ear (110);
a pulling tie (20) mounted through and compressed by the pressing member (12) and having two ends mounted respectively through the pulling tie holes (132) in the tie fastening holders (13); and
a tightening tie (30) having two ends mounted respectively through the first hole segments (1311) in the tie fastening holders (13) along a first direction, mounted respectively over the separating members (14) and mounted respectively through the second hole segments (1312) in the tie fastening holders (13) along a second direction opposite to the first direction.

2. The binding assembly as claimed in claim 1, wherein the base (11) is rectangular and has two engaging holes (112) defined through the base (11);
the pressing member (12) has two ends and two hooks (122) formed respectively on the ends of the pressing member (12), engaging respectively the engaging holes (112) in the base (11) and abutting with a bottom of the base (11).

3. The binding assembly as claimed in claim 1 or 2, wherein the pivotal ears (110) are curved in cross section.

4. The binding assembly as claimed in claim 3, wherein each separating member (14) is annular and has a depression segment formed on a top of the separating member (14).

5. The binding assembly as claimed in claim 4, wherein the pulling tie (20) is annular and has a central segment compressed by the pressing member (12) to form two end loops mounted respectively through the pulling tie holes (132) in the tie fastening holders (13).

6. The binding assembly as claimed in claim 1, wherein each separating member (14) is annular and has a depression segment formed on a top of the separating member (14).

7. The binding assembly as claimed in claim 1, wherein the pulling tie (20) is annular and has a central segment compressed by the pressing member (12) to form two end loops mounted respectively through the pulling tie holes (132) in the tie fastening holders (13).

## Patentansprüche

1. Verbindungsanordnung, umfassend:
einen Verbindungsrahmen (10), umfassend:
eine Basis (11) mit einer Oberseite und zwei gegenüberliegenden Seiten;
ein Druckelement (12), das an der Oberseite der Basis (11) befestigt ist;
zwei Schwenkösen (110), die jeweils an den gegenüberliegenden Seiten der Basis (11) befestigt sind;
zwei Bandbefestigungshalter (13), die jeweils schwenkbar mit den Schwenkösen (110) verbunden und L-förmig sind, wobei jeder Bandbefestigungshalter (13) umfasst:
ein seitliches Segment, das schwenkbar mit einem entsprechenden Segment der Schwenkösen (110) verbunden ist;
ein längliches Segment, das mit dem seitlichen Segment verbunden ist;
eine Bandzugöffnung (132), die durch das längliche Segment definiert ist; und
eine Bandstraffungsöffnung (131), die durch das seitliche Segment definiert ist; und
zwei Trennelemente (14), die jeweils um die seitlichen Segmente des Bandbefestigungshalters (13) herum befestigt sind, um die Bandstraffungsöffnung (131) in einem entsprechenden seitlichen Segment in ein erstes Öffnungssegment (1311), das der entsprechenden Schwenköse (110) benachbart ist, und ein zweites Öffnungssegment (1312), das sich entfernt von der entsprechenden Schwenköse (110) befindet, zu trennen;
ein Zugband (20), das durch das Druckelement (12) befestigt ist und durch dieses zusammengedrückt wird und welches zwei Enden aufweist, die jeweils durch die Bandzugöffnungen (132) in den Bandbefestigungshaltern (13) befestigt sind; und
ein Befestigungsband (30) mit zwei Enden, die jeweils durch die ersten Öffnungssegmente (1311) in den Bandbefestigungshaltern (13) entlang einer ersten Richtung befestigt sind und jeweils über den Trennelementen (14) befestigt sind und jeweils durch die zweiten Öffnungssegmente (1312) in den Bandbefestigungshaltern (13) entlang einer zweiten Richtung entgegen der ersten Richtung befestigt sind.

2. Verbindungsanordnung gemäß Anspruch 1, wobei die Basis (11) rechtwinklig ist und zwei Einrastöffnungen (112) aufweist, die durch die Basis (11) definiert sind;
wobei das Druckelement (12) zwei Enden aufweist und zwei Haken (122), die jeweils an den Enden des Druckelements (12) gebildet sind, jeweils in die Einrastöffnungen (112) in der Basis (11) einrasten und an eine Unterseite der Basis (11) angrenzen.

3. Verbindungsanordnung gemäß Anspruch 1 oder 2, wobei die Schwenkösen (110) einen gekrümmten Querschnitt aufweisen.

4. Verbindungsanordnung gemäß Anspruch 3, wobei jedes Trennelement (14) ringförmig ist und ein Vertiefungssegment aufweist, das an einer Oberseite des Trennelements (14) gebildet ist.

5. Verbindungsanordnung gemäß Anspruch 4, wobei das Zugband (20) ringförmig ist und ein Zentralsegment aufweist, das durch das Druckelement (12) zusammengedrückt wird, um zwei Endschleifen zu bilden, die jeweils durch die Zugbandöffnungen (132) in den Bandbefestigungshaltern (13) befestigt sind.

6. Verbindungsanordnung gemäß Anspruch 1, wobei jedes Trennelement (14) ringförmig ist und ein Vertiefungssegment aufweist, das an einer Oberseite des Trennelements (14) gebildet ist.

7. Verbindungsanordnung gemäß Anspruch 1, wobei das Zugband (20) ringförmig ist und ein Zentralsegment aufweist, das durch das Druckelement (12) zusammengedrückt wird, um zwei Endschleifen zu bilden, die jeweils durch die Zugbandöffnungen (132) in den Bandbefestigungshaltern (13) befestigt sind.

## Revendications

1. Montage de lien comprenant:
un cadre de lien (10) comprenant
une base (11) présentant un dessus et deux côtés opposés;
un élément de pression (12) monté sur le dessus de la base (11);
deux pattes pivotantes (110) montées respectivement sur les côtés opposés de la base (11);
deux fixations retenant un cordon (13) respectivement reliées de façon pivotante aux pattes pivotantes (110) et en forme de L, chaque fixation retenant un cordon (13) comprenant
un segment latéral relié de façon pivotante à l'une correspondante des pattes pivotantes (110);
un segment longitudinal relié au segment latéral;
un trou de cordon tirant (132) défini au travers du segment longitudinal; et
un trou de cordon serrant (131) défini au travers du segment latéral; et
deux éléments de séparation (14) montés respectivement autour des segments latéraux des fixations retenant un cordon (13) pour diviser le trou de cordon serrant (131) dans un segment latéral correspondant en un premier segment de trou (1311) adjacent à la patte pivotante (110) correspondante et en un second segment de trou (1312) à distance de la patte pivotante (110) correspondante;
un cordon tirant (20) monté au travers et comprimé par l'élément de pression (12) et présentant deux extrémités montées respectivement à travers les trous de cordon tirant (132) dans les fixations retenant un cordon (13); et
un cordon serrant (30) présentant deux extrémités montées respectivement à travers les premiers segments de trou (1311) dans les fixations retenant un cordon (13) le long d'une première direction, montées respectivement au-dessus des éléments de séparation (14) et montées respectivement à travers les seconds segments de trou (1312) dans les fixations retenant un cordon (13) le long d'une seconde direction opposée à la première direction.

2. Montage de lien selon la revendication 1, dans lequel la base (11) est rectangulaire et présente deux trous d'engagement (112) définis à travers la base (11);
l'élément de pression (12) présente deux extrémités et deux crochets (122) formés respectivement sur les extrémités de l'élément de pression (12), engageant respectivement les trous d'engagement (112) dans la base (11) et butant avec un bas de la base (11).

3. Montage de lien selon la revendication 1 ou 2, dans lequel les pattes pivotantes (110) sont incurvées en section transversale.

4. Montage de lien selon la revendication 3, dans lequel chaque élément de séparation (14) est annulaire et présente un segment en creux formé sur un dessus de l'élément de séparation (14).

5. Montage de lien selon la revendication 4, dans lequel le cordon tirant (20) est annulaire et présente un segment central comprimé par l'élément de pression (12) pour former deux boucles d'extrémité montées respectivement à travers les trous de cordon tirant (132) dans les fixations retenant un cordon (13).

6. Montage de lien selon la revendication 1, dans lequel chaque élément de séparation (14) est annulaire est présente un segment en creux formé sur un dessus de l'élément de séparation (14).

7. Montage de lien selon la revendication 1, dans lequel le cordon tirant (20) est annulaire et présente un segment central comprimé par l'élément de pression (12) pour former deux boucles d'extrémité montées respectivement à travers les trous de cordon tirant (132) dans les fixations retenant un cordon (13).
